# EUROPEAN PATENT SPECIFICATION

(11) **EP 1 374 674 B1**
(45) Date of publication and mention of the grant of the patent: **04.01.2006**
(21) Application number: 03076881.6
(22) Date of filing: 17.06.2003
(51) Int. Cl.: A01L 13/00, A61D 3/00

(54) **Apparatus for treating a hind leg of a four-legged animal**
Vorrichtung zur Behandlung eines Hinterbeines eines vierbeinigen Tieres
Dispositif de traitement d'une patte postérieure d'un quadrupède

(30) Priority: 18.06.2002 NL 1020894
(43) Date of publication of application: 02.01.2004
(73) Proprietor: Wopa B.V., 7135 JV Harreveld (NL)
(72) Inventor: Wopereis, Johannes Wilhelmus Antonius, 7135 JV Harreveld (NL)
(74) Representative: Prins, Adrianus Willem

(56) References cited:
- DE-A- 2 919 281
- DE-C- 371 716
- DE-U- 29 713 038

## Description

The invention relates to an apparatus for treating a hind leg of a four-legged animal, in particular of a cow, the apparatus being provided with holding means for holding the animal, the holding means being provided with a retaining member extending, during use, at least behind the hind leg to be treated of the animal when this hind leg is in a standing position, the apparatus being provided with lifting means for bringing the hind leg from the standing position to a raised position for treatment and vice versa.

Such an apparatus is known from DE-U-29713038. The apparatus serves for tending to a hind leg of the animal while the hind leg is in the raised position for treatment. With the apparatus, in particular a claw or a hoof of the hind leg to be treated can be inspected for diseases and/or other ailments. Known cattle diseases of a hind hoof are dermatitis interdigitalis, foundered hoof and Mortellaro's disease. In order to prevent and/or cure such diseases and ailments, the hoof can for instance be given a pedicure, which may comprise cutting the hoof to length, cutting away a bearing surface beneath the hoof and/or a different form of trimming.

During use of the known apparatus, the animal is held by the holding means, at least in a position wherein both hind legs are in a standing position. The front legs of the animal can also be in a standing position, but, for instance, can each also be in a different position such as a kneeling position. In a simple manner, by means of the lifting means, the hind leg to be treated is brought from the standing to the raised position for treatment so that the above-mentioned inspection of, tending to and/or treatment of the hind leg, in particular of the hind leg hoof, can be carried out. After treatment of this hind leg, the leg is returned to the standing position. Then, for instance, the other hind leg can be brought to a raised position for treatment by the lifting means to be tended to in a similar manner.

The retaining member extends at least behind the hind leg to bo treated of the animal when this hind leg is in a standing position. Thus, the retaining member prevents the animal from moving backwards when this leg is in the standing position and therefore contributes to the holding of the animal. Moreover, the retaining member can prevent the animal from kicking backwards with at least its hind leg to be treated, which increases the safety of, for instance, a keeper present behind the animal. DE-U-2971308 discloses a retaining means in the form of a transverse tube 12 of which the height can be adjusted and of which the height is fixed by pins after adjustement.

From practice, a retaining member is known designed as a chain extending along both hind legs of the animal. An advantage of a chain is that with it, animals of different sizes, in particular with different leg lengths can be held. During use, the extremities of the chain are fixed on both sides of the animal. The chain is then pulled relatively tightly against the hind legs of the animal, so that the animal can be retained by the chain relatively firmly. Subsequently, during lifting of the hind leg to be treated, a part of the chain is taken along upwards.

It is noted that from practice, also the use of a fixed horizontal tube extending behind the animal is known for retaining the animal at the rear side. However, the known tube does not extend behind the hind legs of the animal so that the safety of, for instance, a keeper present behind the animal cannot be guaranteed by that tube.

A disadvantage of using the chain, fixed on both sides and pulled relatively tightly, is that when lifting the one hind leg, which often happens with a hoist or such mechanical lifting means, a different part of the chain undergoes a partly vertical displacement in the direction of the hind leg to be treated, which leads to both hind legs being pinched off. This leads to considerable discomfort to the animal and, moreover, can cause damage to the legs. An additional disadvantage of the chain is that with it, the hind leg to be treated cannot or can hardly be fixed in the treating position in a stable manner, which complicates tending to that leg.

The invention contemplates obviating the disadvantages of the known apparatus while maintaining its advantages. In particular, the invention contemplates an apparatus suitable for treating legs of different animals with at least different leg lengths, while the hind legs of the animal are not pinched off by the retaining member when the one hind leg is brought into the position for treatment.

To this end, the apparatus according to the invention as defined in claim 1 is characterized in that at least during use of the lifting means for bringing the hind leg from the one to the other position, the retaining member is arranged such that the retaining member can be moved substantially only vertically, the retaining means being provided with means arranged for opposing an upward movement of the retaining member by a force directed substantially downward on that member.

Therefore, during use, the retaining member can move along with the hind leg to be treated substantially vertically. When the retaining member extends along both hind legs, the hind legs are thus prevented from being pinched off by this member. Further, this retaining member can apply a very constant retaining force to the animal. The substantially vertical direction can include an angle with a vertical plane. The member can for instance be moved unwards in a slightly inclined direction away from the animal during use. In this manner, a particular shape of the rear side of the animal can for instance be taken into account, so that the retaining member, when being moved upwards, can be prevented from jamming against a part of the rear side of an animal, for instance a projecting rump. Naturally, this depends on the size of the animal, at least the rear side of the animal such as, for instance, the rump.

The apparatus is particularly suitable for treating animals with legs of different lengths, as, during lifting of a hind leg, at least the height position of the retaining member can simply be adjusted to the length of the leg in that, at least during use of the lifting means, it can be moved substantially vertically.

Moreover, when the hind leg to be treated is in the raised position, the retaining member can be brought to a height which is adjusted to the height dimensions of the animal such that the retaining member can apply a good, effective retaining force to a relatively solid part of the animal, for instance the hip joint of the cow. Thus, the retaining member can be prevented from resting against a weak part of the animal, such as a hock of the hind leg, when the leg to be treated is in the position for treatment.

The retaining member applies a substantially downwardly directed clamping force to the hind leg to be treated after this leg has been brought to the raised position by the lifting means, thereby taking the retaining member upward over a distance. By a combination of the clamping force and the lifting force applied by the retaining member and the lifting means, respectively, the hind leg is held relatively solidly and very stably in the position for treatment, so that inspection of and/or tending to the hind leg, in particular its hoof, can be carried out easily and safely.

An additional advantage of the above-mentioned means is that, when the hind leg is raised to such an extent that the leg extends from a rear side of the animal in an upwardly inclined direction, the retaining member, under the influence of the substantially downwardly directed force, can move down again along the hind leg to a particularly stable position against the rear side of the animal. In this position, the retaining member can apply an effective retaining force to the rear side of the animal for the purpose of retaining the animal.

Moreover, in a relatively simple manner, through the substantially downwardly directed force of the above-mentioned means, the retaining member can be returned from the upwardly moved position to an initial position after the treatment has finished, at least when the hind leg to be treated is moved back from the position for treatment to the standing position.

According to a preferred embodiment of the invention, the retaining member is designed such that the retaining member can be moved along the hind leg of the animal with relatively little friction.

Thus, the retaining member can move along the hind leg of the animal in a simple manner when that leg is moved upward or downward. Therefore, this operation can be carried out relatively rapidly, while the danger of the retaining member damaging the hind leg is relatively small. To this end, the retaining member can be provided with at least one roller element, such that during use, the retaining element can roll over the leg.

According to a further elaboration of the invention, the retaining member is designed such that during use, it extends behind both hind legs of the animal.

This retaining member can retain the animal against both hind legs when the legs are in the standing position. Then, one of the hind legs can be brought from that position to the position for treatment for inspection and/or care. As the retaining member is arranged for movement in substantially only a vertical direction, the hind legs are prevented from being pinched off.

Further elaborations of the invention are described in the subclaims. The invention will presently be elucidated with reference to an exemplary embodiment and the drawing. In the drawing:
Fig. 1 shows a schematically represented perspective view of an exemplary embodiment of the invention, wherein the retaining member is in a releasing position;
Fig. 2 shows a similar view as Fig. 1, wherein the retaining member is in a lower retaining position; and
Fig. 3 shows a similar view as represented in Fig. 2, wherein the retaining member is in an upper retaining position.

The Figures show a relevant part of the apparatus for treating the hind legs 1, 2 or a four-legged animal K, in particular a cow. In the Figures, it is represented how this apparatus is used for tending to the left hind leg 1 of the animal K. In a corresponding manner, the apparatus is suitable for treating the right hind leg 2 of the animal K. For the sake of clarity of the drawing, only a frame rear side 10 of the apparatus and a rear side of the animal K are represented in the Figures.

The apparatus is provided with holding means for holding the animal K in a standing position. The holding means are provided with a retaining member 3, with which member 3 the animal can be retained at the rear side. In addition, the holding means can for instance be provided with means (not shown) for holding the animal at the front side, such as a neck chain provided on or against the animal, a cross bar, a retaining belt and/or two rods arranged so as to be moveable towards each other and away from each other and extending in vertical direction, with which the throat or neck of the animal can be clamped-in.

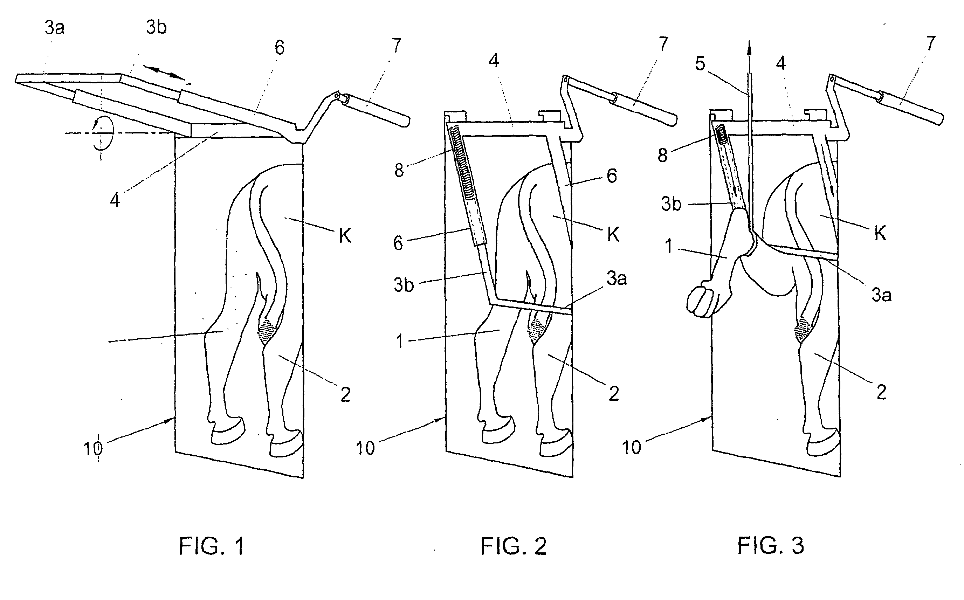

As shown in Fig. 1, the retaining member 3 is designed as a U-shaped bracket provided with a cross bar 3a with side arms 3b extending at right angles thereto. The side arms 3b extend telescopically in tubular pivoting arms 6. These pivoting arms 6 are connected to a pivot axis 4, which axis is rotatably coupled to an upper side of a schematically represented frame rear side 10 of the apparatus. By rotating the pivot axis 4, the pivoting arms 6 pivot such that the retaining member 3 can be moved from a releasing position to a retaining position, and vice versa. The pivoting arms 6 can be operated by means of an element 7. The element 7 can for instance comprise a hydraulically energized piston-cylinder assembly or a lever operable by hand.

Figure 1 and Figure 2 show the retaining member 3 in the releasing and retaining position, respectively. In the releasing position of the retaining member 3 shown in Fig. 1, the animal K can move into the apparatus underneath the retaining member 3, at least via the frame rear side 10 represented in the Figure. In the retaining position of the retaining member 3 represented in Fig. 2, a cross bar 3a of this member extends along both hind legs 1, 2 of the animal K, such that the member 3 prevents the animal from moving backwards.

As shown in Fig. 2 and 3, the pivoting arms 6 are provided with springs 8, designed for preventing the side arms 3b of the bracket 3 from shifting in the direction of the pivot axis 4. Figure 3 further shows that the apparatus is provided with a pulling cord 5 serving as a lifting means for lifting the hind leg 1 to be tended to. The pulling cord 5 can for instance be connected to a hoist or a winch.

During use of the apparatus, first, the animal K is brought into the apparatus. The bracket 3 is then in the releasing position, as represented in Fig. 1. Then, the bracket 3 is brought to the retaining position, while extending behind the two hind legs 1, 2 of the animal K for retaining the animal K at the rear side. Thereupon, while using the pulling cord 5, the hind leg to be tended to is brought from the standing position represented in Fig. 2 to the raised position for treatment represented in Fig. 3. The bracket 3 is then taken along upwards by the left hind leg 1 against the spring action of the spring 8.

As shown in Fig. 3, this leg 1 is lifted to such an extent that the leg 1 extends from a rear side of the animal K in an upwardly inclined direction. The spring means 8 cause the retaining bracket 3 to move downward again under the influence of a substantially downwards directed spring force, along the hind leg 1 to a particularly stable position against a rear side of the animal K. In this position, the retaining member can apply an effective retaining force to the rear side of the animal K for the purpose of holding the animal K. Moreover, the retaining bracket 3 lies against the animal K near the other hind leg 2, so that also at that location, the bracket 3 can apply a retaining force to the animal. Preferably, the bracket 3 is designed such that, with relatively little friction, it can be moved along a hind leg 1, 2 of the animal K. Moving back along the leg can therefore be done relatively easily, in particular by itself.

Moreover, the retro-active force of the spring means 8 is highly advantageous because it results in the bracket 3 applying a clamping force to the hind leg 1 of the animal, so that this hind leg 1 can be retained in the desired position for treatment in a very stable manner. In Fig. 3, it is clearly visible that, under the influence of the interplay of forces, automatically, the cross bar 3a comes to lie in the hinge cavity of the hip joint of the animal where it finds a stable position which ensures that the animal is well clamped-in.

It is self-evident that the invention is not limited to the exemplary embodiment described. Various modifications are possible within the framework of the invention as outlined by the following claims.

For instance, the retaining member can be manufactured from various materials, for instance from metal, wood, plastic, glass fiber and/or a combination of these or other materials. Further, the retaining member can be formed in different manners, for instance straight, curved, solid, hollow or in combinations thereof. Furthermore, within the framework of the invention, the retaining member can be designed to be partly flexible, comprise a chain or the like. The apparatus can further be provided with a number of retaining members, which can apply a retaining force to one or both hind legs of the animal. It is, for instance, possible that for each hind leg one separate retaining member 3 is available.

Further, the apparatus can for instance be provided with a frame arranged for accommodating the animal during treatment of the hind leg, while the retaining means are coupled to the frame. The frame can further be provided with, for instance, the lifting means mentioned. In addition, the frame can comprise a box stall or the like. The frame can be designed to be moveable, in particular on wheels.

Further, the lifting means of the apparatus can be designed in different manners, for instance as a cord, elevating means, hoisting means or other means suitable to that end.

Further, the apparatus can be of wholly or partly motorized design. The apparatus can for instance be provided with hydraulically driven lifting means, holding means and the like. The spring 8 can be designed as gas springs whose spring force may, optionally, be adjustable.

## Claims

1. An apparatus for treating a hind leg (1,2) of a four-legged animal, in particular a cow, the apparatus being provided with holding means for holding the animal, the holding means being provided with a retaining member (3) extending, during use, at least behind the hind leg to be treated of the animal when this hind leg is in a standing position, the apparatus being provided with lifting means (5) for bringing said hind leg from the standing position to a raised position for treatment and vice versa, **characterized in that** the retaining member (3), at least during use of the lifting means (5) for bringing the hind leg from the one to the other position, is arranged such that the retaining member (3) can be moved only substantially vertically,
the holding means (3) being provided with means (8) arranged for opposing an upwardly directed movement of the retaining member (3) by a force directed substantially downwardly on that member (3).

2. An apparatus according to claim 1, **characterized in that** said means comprise spring means (8).

3. An apparatus according to any one of the preceding claims, **characterized in that** the retaining member (3) is arranged such that the member (3) can be moved upwards in a slightly inclined direction away from the animal during use.

4. An apparatus according to any one of the preceding claims, **characterized in that** the retaining member (3) is designed such that the retaining member can be moved along the hind leg of the animal with relatively little friction.

5. An apparatus according to claim 4, **characterized in that** the retaining member (3) is provided with at least one roller element such that, during use, the retaining member (3) can be rolled over said leg.

6. An apparatus according to any one of the preceding claims, **characterized in that** the retaining member comprises a bar-shaped member (3).

7. An apparatus according to any one of the preceding claims, **characterized in that** the retaining means are designed such that the retaining member (3) can be brought from a holding position to a releasing position and vice versa, in which retaining and releasing position the retaining member (3) substantially does extend and does not extend, respectively, behind the hind leg to be treated of the animal.

8. An apparatus according to claim 7, **characterized in that** the retaining means (3) are provided with at least one pivoting arm (6) to which the retaining member (3) is coupled, such that the retaining member (3) can be moved from the retaining position to the releasing position and vice versa by pivoting the at least one pivoting arm (6).

9. An apparatus according to any one of the preceding claims, **characterized in that** the retaining member (3) is designed such that during use, it extends behind both hind legs (1, 2) of the animal.

10. An apparatus according to any one of the preceding claims, **characterized in that** the apparatus is provided with a frame arranged for accommodating the animal during treatment of the hind leg, while the retaining means (3) are coupled to the frame.

## Patentansprüche

1. Vorrichtung zur Behandlung eines Hinterbeins (1, 2) eines vierbeinigen Tieres, insbesondere einer Kuh, wobei die Vorrichtung Haltemittel zum Festhalten des Tieres aufweist und die Haltemittel ein Rückhalteelement (3) aufweisen, das sich während der Benutzung zumindest hinter das zu behandelnde Hinterbein des Tieres erstreckt, sofern sich dieses in der Standposition befindet, wobei die Vorrichtung Hebemittel (5) aufweist, um das Hinterbein zur Behandlung von der Standposition in eine erhobene Position und andersherum zu bringen, **dadurch gekennzeichnet, dass** das Rückhalteelement (3), zumindest während der Verwendung der Hebemittel (5), mit denen das Hinterbein von der einen in die andere Position gebracht wird, derart angeordnet ist, dass das Rückhalteelement (3) ausschließlich im wesentlichen vertikal bewegt werden kann und die Haltemittel (3) Mittel (8) aufweisen, die dafür vorgesehen sind, einer nach oben gerichteten Bewegung des Rückhalteelements (3) durch eine auf dieses Element (3) wirkende, im wesentlichen nach unten gerichtete Kraft entgegen zu wirken.

2. Vorrichtung gemäß Anspruch 1, **dadurch gekennzeichnet, dass** diese Mittel ein Federmittel (8) umfassen.

3. Vorrichtung gemäß einem der vorhergehenden Ansprüche, **dadurch gekennzeichnet, dass** das Rückhalteelement (3) derart angeordnet ist, dass das Element (3) während der Benutzung in einer leicht geneigten Richtung nach oben von dem Tier wegbewegt werden kann.

4. Vorrichtung gemäß einem der vorhergehenden Ansprüche, **dadurch gekennzeichnet, dass** das Rückhalteelement (3) so ausgeführt ist, dass dieses mit relativ geringer Reibung an dem Hinterbein des Tieres entlang bewegt werden kann.

5. Vorrichtung gemäß Anspruch 4, **dadurch gekennzeichnet, dass** das Rückhalteelement (3) mindestens ein Rollelement aufweist, so dass das Rückhalteelement (3) während der Benutzung über das Bein rollen kann.

6. Vorrichtung gemäß einem der vorhergehenden Ansprüche, **dadurch gekennzeichnet, dass** das Rückhalteelement ein Element in Form einer Stange (3) aufweist.

7. Vorrichtung gemäß einem der vorhergehenden Ansprüche, **dadurch gekennzeichnet, dass** die Rückhaltemittel so ausgeführt sind, dass das Rückhalteelement (3) von einer Halteposition in eine Löseposition und andersherum gebracht werden kann, wobei sich das Rückhalteelement (3) in der Rückhalte- und Löseposition entsprechend hinter das zu behandelnde Bein des Tieres erstreckt oder nicht erstreckt.

8. Vorrichtung gemäß Anspruch 7, **dadurch gekennzeichnet, dass** die Rückhaltemittel (3) mindestens einen Schwenkarm (6) aufweisen, mit dem das Rückhalteelement (3) verbunden ist, so dass das Rückhalteelement (3) durch das Schwenken des mindestens einen Schwenkarms (6) von der Rückhalteposition in die Löseposition und andersherum bewegt werden kann.

9. Vorrichtung gemäß einem der vorhergehenden Ansprüche, **dadurch gekennzeichnet, dass** das Rückhalteelement (3) so ausgeführt ist, dass sich dieses während der Benutzung hinter beide Hinterbeine (1, 2) des Tieres erstreckt.

10. Vorrichtung gemäß einem der vorhergehenden Ansprüche, **dadurch gekennzeichnet, dass** die Vorrichtung einen Rahmen zur Aufnahme des Tieres während der Behandlung des Hinterbeins aufweist, wobei die Rückhaltemittel (3) mit dem Rahmen verbunden sind.

## Revendications

1. Dispositif pour traiter une patte arrière (1, 2) d'un animal quadrupède, en particulier d'une vache, le dispositif étant doté de moyens de maintien servant à maintenir l'animal, les moyens de maintien étant dotés d'un élément de retenue (3) s'étendant, en cours d'utilisation, au moins derrière la patte arrière devant être traitée de l'animal, lorsque cette patte arrière est en position verticale, le dispositif étant doté d'un moyen de relevage (5) permettant, pour le traitement, de faire passer ladite patte arrière, de la position verticale à une position relevée, et vice versa,
**caractérisé en ce que** l'élément de retenue (3), au moins au cours de l'utilisation du moyen de relevage (5) pour faire passer la patte arrière d'une position à l'autre, est disposé de manière telle, que l'élément de retenue (3) ne puisse être déplacé que de façon sensiblement verticale,
les moyens de maintien (3) étant dotés d'un moyen (8) agencé pour opposer un mouvement - dirigé vers le haut - de l'élément de retenue (3), par une force appliquée sur cet élément (3) et dirigée sensiblement vers le bas.

2. Dispositif selon la revendication 1, **caractérisé en ce que** ledit moyen comprend un moyen (8) formant ressort.

3. Dispositif selon l'une des revendications précédentes, **caractérisé en ce que** l'élément de retenue (3) est agencé de manière telle, que l'élément (3), en cours d'utilisation, puisse être déplacé vers le haut, suivant une direction légèrement inclinée, à distance de l'animal.

4. Dispositif selon l'une quelconque des revendications précédentes, **caractérisé en ce que** l'élément de retenue (3) est conçu de manière telle, que l'élément de retenue puisse être déplacé le long de la patte arrière de l'animal, avec un frottement relativement faible.

5. Dispositif selon la revendication 4, **caractérisé en ce que** l'élément de retenue (3) est doté d'au moins un élément à rouleau, de manière telle, qu'en cours d'utilisation, l'élément de retenue (3) puisse être roulé sur ladite patte.

6. Dispositif selon l'une quelconque des revendications précédentes, **caractérisé en ce que** l'élément de retenue comprend un élément (3) en forme de barre.

7. Dispositif selon l'une quelconque des revendications précédentes, **caractérisé en ce que** les moyens de retenue sont conçus de manière telle, que l'élément de retenue (3) puisse passer d'une position de maintien à une position de libération, et vice versa, position de retenue et de libération dans laquelle l'élément de retenue (3) s'étend et ne s'étend pas, respectivement, de façon substantielle, derrière la patte arrière de l'animal devant être traité.

8. Dispositif selon la revendication 7, **caractérisé en ce que** les moyens de retenue (3) sont dotés d'au moins un bras pivotant (6) auquel est couplé l'élément de retenue (3), de manière telle que l'élément de retenue (3) puisse être déplacé, passant de la position de retenue à la position de libération, et vice versa, en faisant pivoter le au moins un bras pivotant (6).

9. Dispositif selon l'une quelconque des revendications précédentes, **caractérisé en ce que** l'élément de retenue (3) est conçu de manière telle, que lors de l'utilisation, il s'étende derrière les deux pattes arrières (1, 2) de l'animal.

10. Dispositif selon l'une quelconque des revendications précédentes, **caractérisé en ce que** le dispositif est doté d'un cadre agencé pour recevoir l'animal au cours du traitement de la patte arrière, alors que les moyens de retenue (3) sont couplés au cadre.
